# EUROPÄISCHE PATENTSCHRIFT

(11) **EP 0 240 732 B1**
(45) Veröffentlichungstag und Bekanntmachung des Hinweises auf die Patenterteilung: **29.09.1993**
(21) Anmeldenummer: 87103165.4
(22) Anmeldetag: 05.03.1987
(51) Int. Cl.: B29C 65/34, F16L 47/02

(54) **Schweisselement zum Verschweissen stumpfgestossener Rohre aus Kunststoff**
Welding element for butt-welding plastic pipes
Elément de soudage pour le soudage bout à bout de tuyaux en matière plastique

(30) Priorität: 04.04.1986 DE 3611192
(43) Veröffentlichungstag der Anmeldung: 14.10.1987
(73) Patentinhaber: Riesselmann & Sohn, D-49393 Lohne (DE)
(72) Erfinder: Kühling, Siegfried, D-2842 Lohne (DE)
(74) Vertreter: Jabbusch, Wolfgang, Dr.Jur. Jabbusch, Wehser & Lauerwald Patentanwälte

(56) Entgegenhaltungen:
- EP-A- 0 160 536
- US-A- 3 378 672

## Beschreibung

Die Erfindung betrifft ein Schweißelement zum Verschweißen stumpfgestoßener Rohre aus Kunststoff, das mit einer Heizdrahtwicklung zur elektrischen Widerstandsbeheizung versehen ist und zwischen die aneinanderstoßenden Rohrenden legbar ist, die bei auf Schweißtemperatur erhitztem Schweißelement aneinander drückbar sind, und nach Abschalten der Beheizung solange aneinandergehalten bleiben, bis der verschweißte Bereich durch Erkalten erhärtet ist, wobei das Schweißelement als Ringscheibe ausgebildet ist, dessen Außendurchmesser etwa gleich dem Außendurchmesser der Rohre ist und dessen Innendurchmesser etwa gleich der Rohrnennweite ist und die Heizdrahtwicklung spiralförmig um das geometrische Zentrum der Ringscheibe läuft.

Ein Schweißelement der vorbezeichneten Gattung ist nach der US-A-3 378 672 bekannt.

Das bekannte Schweißelement ist gebildet aus einem im Profil rechteckigen Kunststoffband mit darin eingebettetem Heizdraht. Das Kunststoffband ist spiral- bzw. schneckenförmig aufgewickelt, so daß die Schnecke aus Kunststoffband eine scheibenförmige Gestalt hat. Eine solche scheibenförmige Schnecke läßt sich zwischen die miteinander zu verbindenden stumpfgestoßenen Rohrenden legen. Der im Kunststoff des Kunststoffbandes eingebettete Heizdraht bildet bei gewickeltem Kunststoffband ebenfalls eine spiralförmig verlaufende Heizdrahtwicklung, die zur elektrischen Widerstandsbeheizung genutzt wird.

Bei einem Verschweißen stumpfgestoßener Rohre mit dem bekannten Schweißelement müssen die Enden der Heizdrahtwicklung vom Außenbereich der Rohre aus zugänglich sein, um die elektrischen Anschlüsse herzustellen. Bei dem bekannten Schweißelement erfordert dies eine Kreuzung von innen nach außen. Das innenliegende Ende des Kunststoffbandes mit dem darin eingebetteten Heizdraht muß die schneckenförmig gelegten Wicklungen des Kunststoffbandes kreuzen, was bei einer Stumpfschweißung zu Schwierigkeiten führt. Es bildet sich zum Beispiel im Kreuzungsbereich eine unerwünschte örtliche Verdickung aus, die zu einer ungleichmäßigen gegenseitigen Anlage der untereinander zu verschweißenden Teile führt. Darüber hinaus hat das bekannte Schweißelement auch den Nachteil, daß bei einer Erhitzung der eingebetteten Heizdrahtwicklung zwar das Kunststoffmaterial des Schweißelementes zum Schmelzen gebracht werden kann. Die aneinander zu stoßenden Rohrenden werden jedoch nicht soweit angeschmolzen, daß eine homogene und dauerhafte Schweißverbindung entsteht. Eine Schweißverbindung mit dem bekannten Schweißelement weist somit nicht einmal die Qualität auf, die mit herkömmlichen Schweißspiegeln erreichbar ist.

Die EP-A-0 160 536 gibt ebenfalls ein Schweißelement in Form eines scheibenförmigen Ringes an, bei dem auf eine Ringseitenfläche eine spiralförmig verlaufende Heizdrahtwicklung gelegt ist, wobei Rillen vorhanden sind, die den Draht aufnehmen. Dieses Schweißelement ist jedoch nur an einer einzigen Ringseitenfläche mit Heizdraht ausgerüstet und es ergibt sich dadurch, daß die Zu- und Ableitungen jeweils auf die freie zweite Ringseitenfläche gelegt sind, das Problem der Drahtkreuzungen nicht. Gerade diese Ausbildung macht das bekannte Schweißelement jedoch ungeeignet für eine Stumpfschweißung. Darüber hinaus sind die Rillen nach Anbringen des Heizdrahtes durch Anlegen eines Schweißbalkens wieder verschlossen. Nach dem Verschließen der Rillen ist der darin eingelegte Heizdraht in das Schweißelement eingebettet, so daß ein Anschmelzen der aneinander zu stoßenden Rohrenden nicht möglich ist.

Der Erfindung liegt die Aufgabe zugrunde, das Stumpfschweißen von Kunststoffrohren dahingehend zu verbessern, daß bei vereinfachter Handhabung eine optimale Qualität der Verschweißung gewährleistet ist.

Diese Aufgabe ist erfindungsgemäß dadurch gelöst worden, daß die Heizdrahtwicklung auf beide mit den Rohrenden zur Anlage kommende Ringseitenflächen gelegt ist, wobei sie, auf einer Ringseitenfläche am Außenumfang beginnend, nach innen zum geometrischen Zentrum verläuft, dort auf die andere Ringseitenfläche durchläuft und dann von innen zum Außenumfang zurückgeführt ist und daß die beiden Ringseitenflächen der Ringscheibe den Verlauf des Drahtes vorgebende Rillen, in die der Draht unter Klemmung einlegbar ist, als Halteorgane für die Heizdrahtwicklung aufweisen.

Bei dem erfindungsgemäßen Schweißelement ist auf beide Seitenflächen der Ringscheibe eine Heizdrahtwicklung gelegt, wobei der Heizdraht in den Verlauf des Drahtes vorgebende Rillen eingeklemmt ist. Durch das erfindungsgemäße beidseitige Anbringen der Heizdrahtwicklung stellt sich der Vorteil ein, daß eine nachteilige Kreuzung der Drahtwicklung entfällt. Die außen an der Ringseitenfläche freiliegende Heizdrahtwicklung hat darüber hinaus den Vorteil, daß nicht nur das Schweißelement selbst, sondern auch die aneinander stoßenden Rohrenden bei Erreichen der Schweißtemperatur plastifiziert sind, da der an den Ringseitenflächen freiliegende Heizdraht Kontakt mit den Rohrenden hat.

Die Rohrenden können in eine endgültige Position ausgerichtet werden und werden lediglich aneinandergedrückt, was notfalls auch manuell ausgeführt werden kann.

Eine Ringscheibe läßt sich mit Vorteil passend zwischen die Rohrenden setzen. Die äußere Umfangsfläche der Ringscheibe schließt bündig mit den Flächen der Rohrenden ab. Der freie Querschnitt der Rohre ist auch nach dem Verschweißen nur unwesentlich verkleinert, da sich durch das Aneinanderdrücken der Rohrenden lediglich ein kleiner Wulst an der Schweißfuge bildet.

Bei Anlegen des Schweißstroms wird der Heizdraht gleichmäßig erwärmt und somit auch die mit den zu verschweißenden Rohrenden in Kontakt stehenden Oberflächen der Ringscheibe gleichmäßig auf Schweißtemperatur gebracht und die Wärme an die anliegenden Rohrenden weitergeleitet. Überhitzte Bereiche treten nicht auf. Die Wicklung ist kreuzungsfrei, da sie, auf einer Seite der Ringscheibe beginnend, spiralförmig nach innen verläuft, dort auf die andere Seite der Ringscheibe durchläuft und dann von innen nach außen wiederum spiralförmig geführt ist. Anfang und Ende des spiralförmig an die Ringseitenflächen gelegten Drahtes stehen von der Ringscheibe ab, so daß sie für den Anschluß der Schweißstromzuführung nutzbar bleiben.

Damit die Heizdrahtwicklung an den Oberflächen der Ringscheibe, den Ringseitenflächen, festgehalten wird, weisen die Ringseitenflächen eingeformte Halteorgane für die Heizdrahtwicklung auf. Als Halteorgane können z.B. den Drahtverlauf vorgebende Rillen vorgesehen sein, in die der Draht unter Klemmung einlegbar ist. Die Heizdrahtwicklung kann einfach aufgebracht werden, indem die Ringscheibe gedreht wird, wobei der drehenden Ringscheibe der Draht fortlaufend zugeführt und in die jeweils zu beschickende, unter einer Drahtzuführung durchlaufende Rille der Ringscheibe eingedrückt wird.

Selbstverständlich besteht die Ringscheibe aus einem bei Erwärmung plastifizierbaren Material, vorzugsweise aus dem gleichen Kunststoff, aus dem auch die zu verschweißenden Rohre gefertigt sind.

Mit besonderem Vorteil kann die Ringscheibe in ein die Form eines Hülsenabschnittes aufweisendes Sattelteil eingesetzt sein. Das Sattelteil kann im Bereich der Rohrenden zweier miteinander fluchtender Rohre angesetzt werden, wobei die in das Sattelteil eingesetzte Ringscheibe dann in die Fuge zwischen den Rohrenden eingelegt ist, sobald das Sattelteil auf den miteinander fluchtenden Rohren aufliegt. Das Sattelteil erfüllt somit die vorteilhafte Funktion, die Ringscheibe zwischen den miteinander zu verschweißenden Rohrenden zu positionieren und in dieser Position zu halten, bis die Rohrenden aneinandergedrückt sind und somit die Ringscheibe zwischen sich klemmend halten. Gleichzeitig erfüllt das Sattelteil auch die Funktion, die miteinander zu verbindenden Rohrenden in einer Flucht zu halten, so daß ein nicht erwünschter Versatz der Rohrenden nicht auftreten kann.

Weiterhin kann das Sattelteil Kontaktelemente aufnehmen, mit denen die Enden der Heizdrahtwicklungen auf der Ringscheibe verbunden sind. Der Anschluß an ein den Schweißstrom abgebendes Schweißaggregat ist dadurch einfach zu handhaben und betriebssicher.

Ein Vorteil ergibt sich daraus, daß das Sattelteil die Ringscheibe in einem Umfang größer als 180° umschließt. Das Sattelteil kann dadurch auf die miteinander zu verbindenden Rohrenden wie eine Klemme wirken, welche die Rohre während des Schweißvorganges einwandfrei positioniert hält. Zusätzliche Haltevorrichtungen für die Rohre während des Verschweißvorganges sind nicht notwendig, da das Halten der Rohre von dem Sattelteil mit übernommen wird.

Weiterhin zeichnet sich das Verschweißelement dadurch aus, daß die Ringscheibe und das Sattelteil gegenseitig in Eingriff bringbare Verbindungselemente aufweisen. Dadurch läßt sich die Ringscheibe separat vom Sattelteil fertigen, mit dem Vorteil, daß sich die Bewicklung der Ringscheibe mit Heizdraht einfacher gestaltet. Die fertig gewickelte Ringscheibe kann dann mit dem vorbereiteten Sattelteil zu einem einsatzbereiten Schweißelement verbunden werden.

Als Verbindungselement ist wenigstens ein von der Ringscheibe radial abstehender Vorsprung und wenigsten eine den Vorsprung aufnehmende Ausnehmung in dem Sattelteil vorgesehen. Ausnehmung und Vorsprung lassen sich ineinanderstecken, so daß der Zusammenbau von Ringscheibe und Sattelteil einfach ist, auf besondere gegenseitige Ausrichtung und Positionierung braucht dabei nicht geachtet zu werden, denn die Teile passen nur dann ineinander, wenn Vorsprung und Ausnehmung miteinander kongruieren.

Vorzugsweise ist die Verbindung so gestaltet, daß der Vorsprung durch die Ausnehmung ragt und daß aus der Ausnehmung vorstehende Ränder des Vorsprungs mit dem Sattelteil verbunden sind. Diese Verbindung kann durch Verkleben oder Verschweißen erfolgen. Beim Verschweißen wird beispielsweise ein erwärmter Balken auf den vorstehenden Rand des Vorsprungs gedrückt, bis dieser plastifiziert, breitgedrückt und die Verbindung zwischen Vorsprung und Sattelteil nach Erkalten voll gegeben ist.

Da das Sattelteil die miteinander zu verschweißenden Rohrenden ohne Versatz ausrichten und halten soll, liegt es mit seinen Innenwandflächen an der äußeren Mantelfläche der Rohrenden an. Da während des Verschweißens die Rohrenden aneinandergedrückt werden, tritt durch die Erwärmung plastisch gewordenes Material aus der Schweißfuge aus und steht wulstartig vor, wie es bei Stumpfschweißverfahren üblich ist. Um trotz des engen Anliegens des Sattelteils an den Oberflächen der Rohrenden die Ausbildung eines Schweißwulstes zu ermöglichen, ist vorgesehen, daß die Innenmantelfläche des Sattelteils eine dem Umfangsrand der Ringscheibe aufnehmende Nut aufweist, deren Breite größer als die Dicke der Ringscheibe ist. In diese Nut kann plastifiziertes, aus der Schweißfuge zwischen den Rohrenden herausgedrücktes Material ausweichen, so daß sich ein sauberer Schweißwulst zwischen den Rohrenden ausbilden kann.

Vorzugsweise ist der Werkstoff für die Ringscheibe und das Sattelteil Polyethylen, welcher Werkstoff für Rohre, insbesondere Gas- und Wasserrohre üblich ist.

Ringscheibe und Sattelteil können in einem einfachen Spritzgußverfahren in großen Stückzahlen hergestellt werden. Da Abmessungen von Rohren genormt sind, können entsprechende Ringscheiben mit Sattelteilen ohne weiteres mit passenden Abmessungen hergestellt werden.

Ein Ausführungsbeispiel der Erfindung, aus dem sich weitere erfinderische Merkmale ergeben, ist in der Zeichnung dargestellt. Es zeigen:
- Fig. 1: eine Ansicht auf eine Scheibe im Stadium der Vorfertigung eines Schweißelements,
- Fig. 2: eine Schnittansicht der Scheibe gemäß Fig. 1,
- Fig. 3: die durch Einkreisung in Fig. 2 gekennzeichnete Einzelheit X in vergrößerndem Maßstab,
- Fig. 4: eine Vorderansicht eines vorgefertigten Sattelteils im Schnitt,
- Fig. 5: eine Seitenansicht des Sattelteils gemäß Fig. 4 im Schnitt
- Fig. 6: verdeutlicht den Zusammenbau einer fertigen Ringscheibe mit dem Sattelteil zu einem Schweißelement,
- Fig. 7: zeigt eine Ansicht eines zusammengebauten Schweißelements im Schnitt und
- Fig. 8: eine Seitenansicht zweier stumpfgestoßener, miteinander zu verschweißender Rohrenden im Halbschnitt, mit angesetztem Schweißelement.

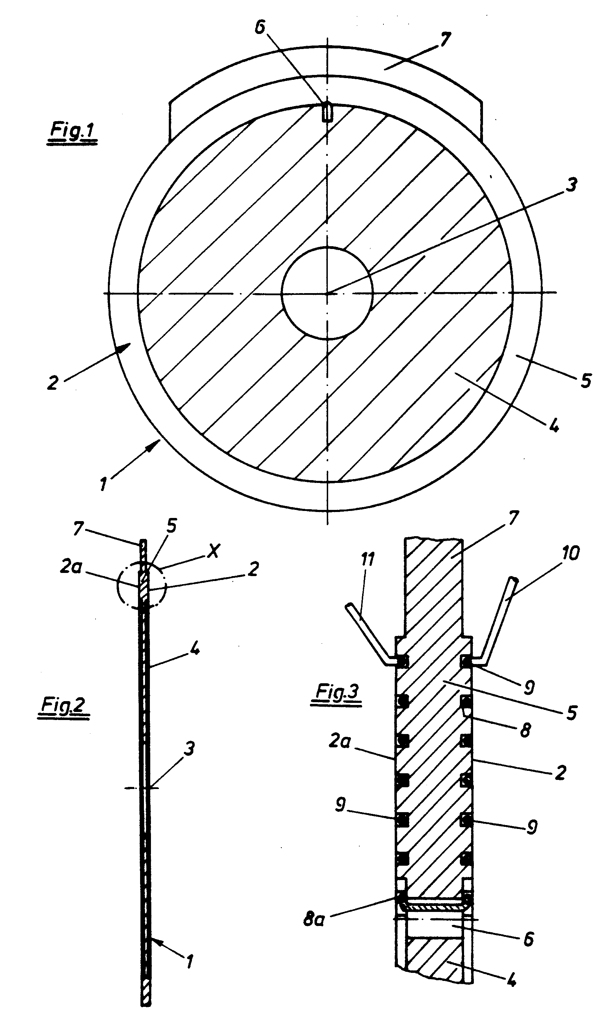

In Fig. 1 ist eine Vorderansicht einer im Spritzgußverfahren aus Kunststoff gefertigten Scheibe 1 dargestellt, deren äußerer Kreisringbereich, der Ringseitenflächen 2, 2a bildet, mit einer um das geometrische Zentrum 3 der Scheibe spiralförmig verlaufenden Heizdrahtwicklung belegt werden kann. Nach Anbringen der Heizdrahtwicklung wird der schraffierte Zentralbereich 4 der Scheibe weggeschnitten, wodurch eine Ringscheibe 5 mit bewickelten Ringseitenflächen 2, 2a verbleibt.

Im Übergangsbereich zwischen wegzuschneidendem zentralen Scheibenbereich 4 und der Ringseitenfläche 2 ist eine Durchbrechung 6 angeordnet, welche ermöglicht, den Draht der Wicklung von der hier sichbaren Ringseitenfläche 2 der Ringscheibe 5 auf die gegenüberliegende Ringseitenfläche 2a der Rihgscheibe zu führen und dort die Bewicklung dann von innen nach außen fortzusetzen.

Im oberen Bereich ist der Rand der Scheibe mit einem Vorsprung 7 versehen. Der Vorsprung dient zur Befestigung der Ringscheibe an einem nachstehend noch näher erläuterten Sattelteil.

In Fig. 2 ist ein Schnitt durch die Scheibe 1 dargestellt. Gleiche Bauteile sind mit gleichen Bezugszahlen bezeichnet. Fig. 2 läßt die beiden mit Heizdrahtwicklungen versehenen Ringseitenflächen 2 und 2a der Ringscheibe 5 erkennen.

In Fig. 3 ist die durch Einkreisung in Fig. 2 gekennzeichnete Einzelheit X in vergrößerndem Maßstab dargestellt. Gleiche Bauteile sind wieder mit gleichen Bezugszahlen bezeichnet. Fig. 3 läßt erkennen, daß in die Ringseitenflächen 2 und 2a der Ringscheibe 5 Rillen 8 eingeformt sind, die spiralförmig verlaufen und der spiralförmigen Verlegung der Heizdrahtwicklung entsprechen. In die Rille ist ein Heizdraht 9 eingelegt. Der Drahtanfang 10 beginnt im Bereich des Außenumfangs der Ringscheibe 5 und verläuft spiralförmig in der Ebene der Ringseitenfläche 2, bis der Durchbruch 6 erreicht ist. Der Durchbruch ist so angeordnet, daß er sich bis in die unterste Rille erstreckt, so daß der Draht durch den Durchbruch 6 zur gegenüberliegenden Rille 8a geführt werden kann und in einer den Rillen in der Ringseitenfläche 2a folgenden Spirale zum Außenumfang zurückgeführt wird, bis das Drahtende 11 frei zur Verfügung steht. Eine derart bewickelte Scheibe 1 wird anschließend durch Ausstanzen des Zentralbereichs 4 zur Ringscheibe 5 ausgebildet.

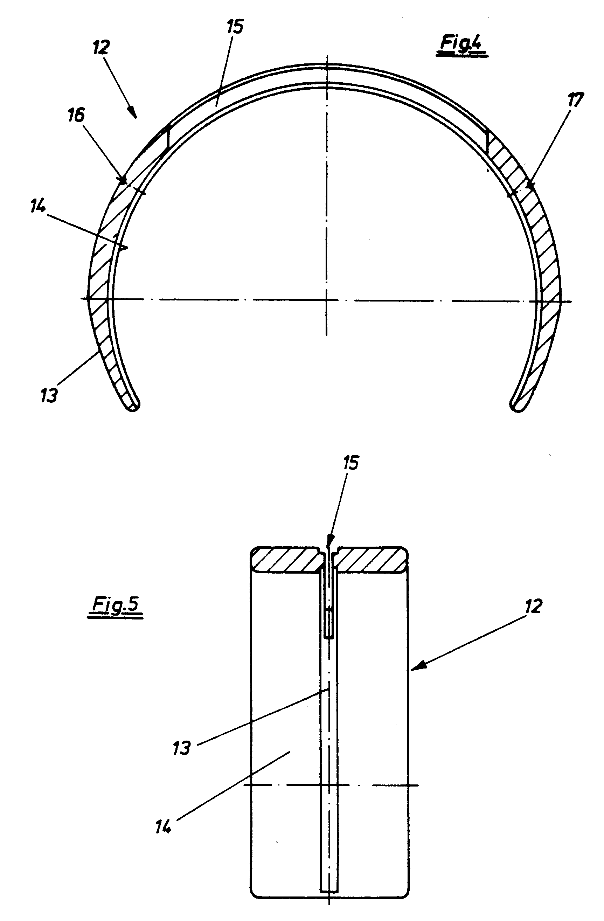

Die bewickelte Ringscheibe 5 wird in ein Sattelteil eingesetzt, das in Fig. 4 in einer Vorderansicht im Schnitt dargestellt ist. Das Sattelteil 12 umschließt die Ringscheibe, wie es hier dargestellt ist, in einem Umfang, der größer ist als 180°. Die Ringscheibe wird in eine Nut 13 an der Innenfläche 14 des Sattelteils eingelegt, wobei sich der Vorsprung 7 der Ringscheibe durch die Ausnehmung 15 des Sattelteils erstreckt. Das Sattelteil weist hier angedeutete Bohrungen 16 und 17 auf, die bei im Sattelteil gehaltener Ringscheibe die freien Drahtenden 10 und 11 aufnehmen können, so daß diese nach außen aus dem Sattelteil vorstehen.

In Fig. 5 ist das Sattelteil 12 in einer Seitenansicht im Schnitt dargestellt. Gleiche Bauteile sind mit gleichen Bezugszahlen bezeichnet.

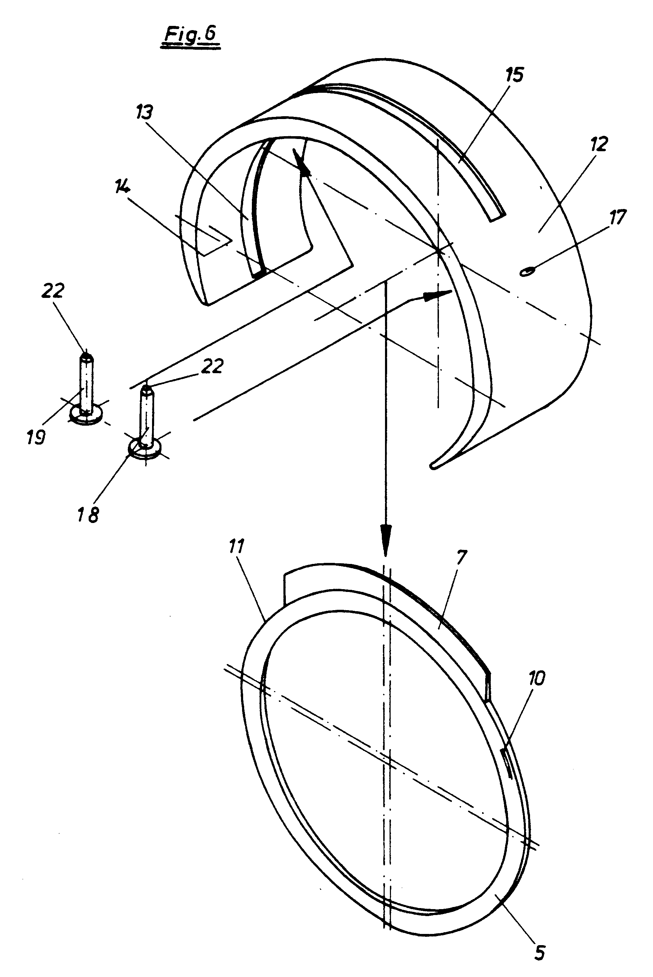

In Fig. 6 ist in einer Explosionsdarstellung noch einmal die bewickelte Ringscheibe 5 und das Sattelteil 12 dargestellt. Gleiche Bauteile sind mit gleichen Bezugszahlen bezeichnet. Fig. 6 läßt erkennen, daß in die Bohrungen 16 und 17 des Sattelteils Kontaktstifte 18 und 19 steckbar sind, in die die freien Enden 10 und 11 der Drahtbewicklung einsteckbar und mit Löttropfen 22 entsprechend befestigt werden können. An die Kontaktstifte sind entsprechende Klemmen eines Schweißaggregats anschließbar.

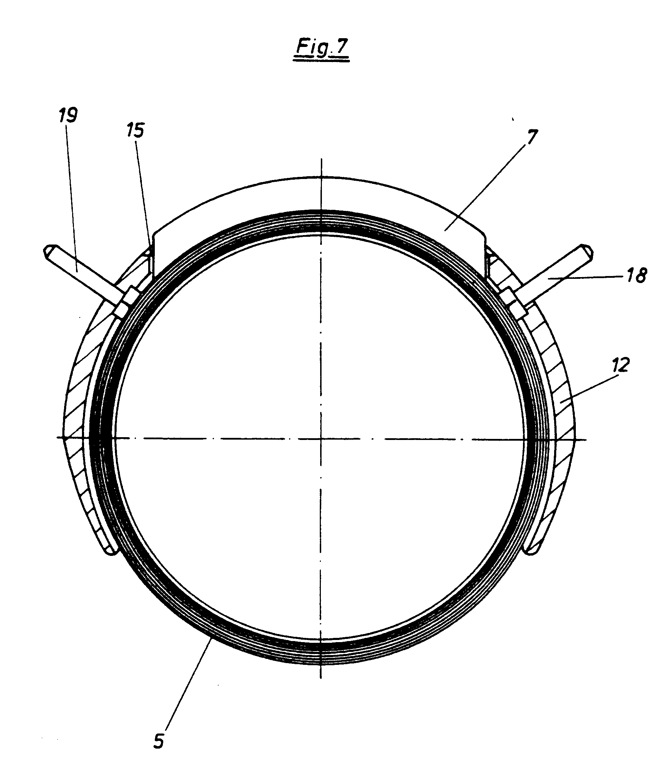

Fig. 7 zeigt eine Schnittansicht durch ein zusammengesetztes Schweißelement, das aus Ringscheibe 5 und Sattelteil 12 besteht, wobei der Vorsprung 7 der Ringscheibe durch die Ausnehmung 15 im Sattelteil vorsteht. Auf den aus der Ausnehmung 15 vorragenden Rand des Vorsprungs 7 kann ein erhitzter Schweißbalken gedrückt werden, der den Rand plastifiziert und breitdrückt, so daß eine feste Verbindung zwischen Ringscheibe und Sattelteil gegeben ist. Fig. 7 läßt auch die Anordnung der Kontaktstifte 18 und 19 erkennen, mittels welcher die Verbindung der Heizdrahtwicklung auf der Ringscheibe 5 mit einem Schweißaggregat gewährleistet ist.

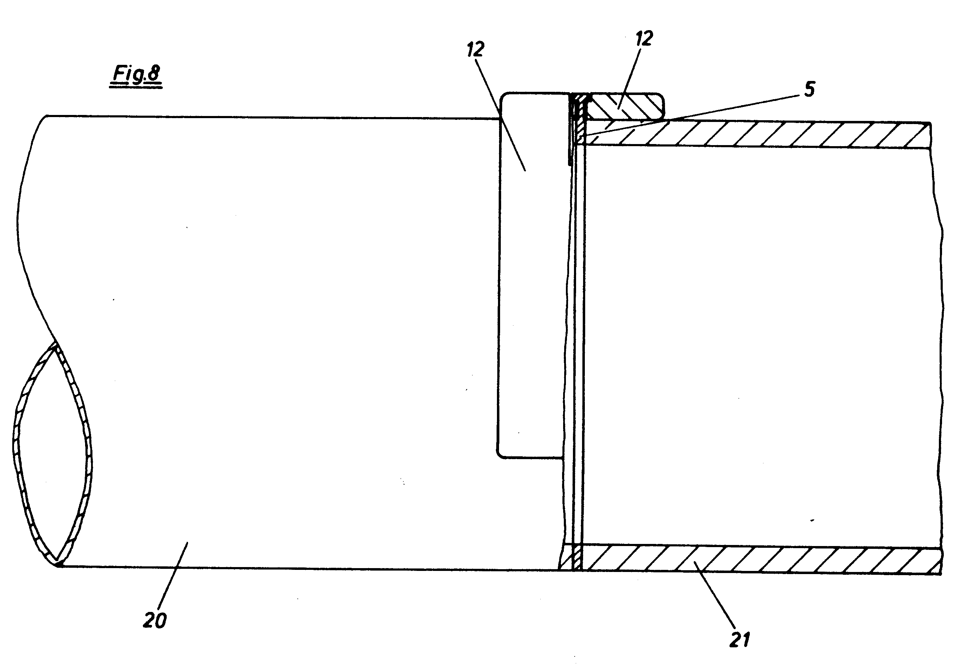

Das derart ausgebildete Schweißelement kann, wie es in Fig. 8 dargestellt ist, auf zwei miteinander fluchtende, stumpfgestoßene Rohre 20 und 21 gesetzt werden. Die Ringscheibe 5 erstreckt sich dabei in die Fuge zwischen den aneinanderstoßenden Rohrenden. Das Sattelteil 12 fixiert die Rohrenden in der für die Verschweißung notwendigen Endstellung.

Das Schweißelement kann nach dem Schweißen der Rohrenden an dem Rohrstrang verbleiben. Es können jedoch auch Maßnahmen getroffen werden, um die Verbindung zwischen Sattelteil und durch den Schweißvorgang zerschmolzener Ringscheibe zu lösen, so daß das Sattelteil abgenommen werden kann.

Das Sattelteil kann auch aus anderem Werkstoff gefertigt werden, so daß gegebenenfalls eine Wiederverwendung möglich ist. Die Ringscheibe muß in jedem Fall aus verschweißbarem, bzw. durch Wärmeeinwirkung plastifizierbarem Material bestehen, welches die miteinander zu verschweißenden Rohrenden verbinden kann.

## Patentansprüche

1. Schweißelement zum Verschweißen Stumpfgestoßener Rohre aus Kunststoff, das mit einer Heizdrahtwicklung zur elektrischen Widerstandsbeheizung versehen ist und zwischen die aneinanderstoßenden Rohrenden legbar ist, die bei auf Schweißtemperatur erhitztem Schweißelement aneinander drückbar sind, und nach Abschalten der Beheizung solange aneinandergehalten bleiben, bis der verschweißte Bereich durch Erkalten erhärtet ist, wobei das Schweißelement als Ringscheibe ausgebildet ist, dessen Außendurchmesser etwa gleich dem Außendurchmesser der Rohre ist und dessen Innendurchmesser etwa gleich der Rohrnennweite ist und die Heizdrahtwicklung spiralförmig um das geometrische Zentrum der Ringscheibe läuft,
dadurch gekennzeichnet,
daß die Heizdrahtwicklung auf beide mit den Rohrenden (20,21) zur Anlage kommende Ringseitenflächen (2,2a) gelegt ist, wobei sie, auf einer Ringseitenfläche (2) am Außenumfang beginnend, nach innen zum geometrischen Zentrum verläuft, dort auf die andere Ringseitenfläche (2a) durchläuft und dann von innen zum Außenumfang zurückgeführt ist
und daß die beiden Ringseitenflächen (2,2a) der Ringscheibe (5) den Verlauf des Drahtes (9) vorgebende Rillen (8), in die der Draht (9) unter Klemmung einlegbar ist, als Halteorgane für die Heizdrahtwicklung aufweisen.

2. Schweißelement nach Anspruch 1, dadurch gekennzeichnet, daß die Ringscheibe (5) in ein die Form eines Hülsenabschnittes aufweisendes Sattelteil (12) eingesetzt ist.

3. Schweißelement nach einem der Ansprüche 1 und 2, dadurch gekennzeichnet, daß die Enden (10,11) der Heizdrahtwicklungen auf der Ringscheibe (5) mit an dem Sattelteil (12) angeordneten Kontaktelementen (18,19) verbunden sind.

4. Schweißelement nach einem der Ansprüche 1 bis 3, dadurch gekennzeichnet, daß das Sattelteil (12) die Ringscheibe (5) in einem Umfang größer als 180° umschließt.

5. Schweißelement nach einem der Ansprüche 1 bis 4, dadurch gekennzeichnet, daß die Ringscheibe (5) und das Sattelteil (12) gegenseitig in Eingriff bringbare Verbindungselemente aufweisen.

6. Schweißelement nach Anspruch 5, dadurch gekennzeichnet, daß als Verbindungselement wenigstens ein von der Ringscheibe (5) radial abstehender Vorsprung (7) und wenigstens eine den Vorsprung (7) aufnehmende Ausnehmung (15) in dem Sattelteil (12) vorgesehen ist.

7. Schweißelement nach Anspruch 6, dadurch gekennzeichnet, daß der Vorsprung (7) durch die Ausnehmung (15) ragt und daß aus der Ausnehmung (15) vorstehende Ränder des Vorsprunges (7) mit dem Sattelteil (12) verbunden sind.

8. Schweißelement nach einem der Ansprüche 1 bis 7, dadurch gekennzeichnet, daß die Innenmantelfläche (14) des Sattelteil (12) eine den Umfangsrand der Ringscheibe (5) aufnehmende Nut (13) aufweist, deren Breite größer als die Dicke der Ringscheibe (5) ist.

9. Schweißelement nach einem der Ansprüche 1 bis 8, dadurch gekennzeichnet, daß der Werkstoff für Ringscheibe (5) und Sattelteil (12) Polyethylen ist.

## Claims

1. A welding element for butt-welding plastics pipes, the welding element being provided with a heating wire winding for electric resistance heating and being placeable between the abutting pipe ends which can be pressed together when the welding element has been heated to the welding temperature and, on interruption of the heating process, are held together until the welded region has hardened by cooling, wherein the welding element is formed as an annular disc, the outer diameter of which is substantially equal to the outer diameter of the pipes and the inner diameter of which is substantially equal to the nominal diameter of the pipes, and the heating wire winding extends spirally about the geometric centre of the annular disc, characterised in that the heating wire winding is placed on both annular side surfaces (2, 2a) coming into contact with the pipe ends (20, 21) and, beginning on an annular side surface (2) on the outer circumference, extends inwards towards the geometric centre, passes through to the other annular side surface (2a) and is then guided back from the inside to the outer circumference, and in that the two annular side surfaces (2, 2a) of the annular disc (5) have grooves (8), into which the wire (9) can be clamped, as holding elements for the heating wire winding, the said grooves (8) determining the path of the wire (9).

2. A welding element according to claim 1, characterised in that the annular disc (5) is inserted into a saddle part (12) in the form of a sleeve portion.

3. A welding element according to either one of claims 1 and 2, characterised in that the ends (10, 11) of the heating wire windings on the annular disc (5) are connected to contact elements (18, 19) arranged on the saddle part (12).

4. A welding element according to any one of claims 1 to 3, characterised in that the saddle part (12) surrounds the annular disc (5) with a circumference greater than 180°.

5. A welding element according to any one of claims 1 to 4, characterised in that the annular disc (5) and the saddle part (12) have mutually engageable connecting elements.

6. A welding element according to claim 5, characterised in that at least one projection (7) projecting radially from the annular disc (5) and at least one recess (15) in the saddle part (12) receiving the projection (7) is provided as connecting element.

7. A welding element according to claim 6, characterised in that the projection (7) projects through the recess (15) and in that edges of the projection (7) are connected to the saddle part (12), the said edges projecting from the recess (15).

8. A welding element according to any one of claims 1 to 7, characterised in that the inner circumferential surface (14) of the saddle part (12) has a slot (13) receiving the circumferential edge of the annular disc (5), the breadth of the said slot (13) being greater than the thickness of the annular disc (5).

9. A welding element according to any one of claims 1 to 8, characterised in that the material used for the annular disc (5) and the saddle part (12) is polyethylene.

## Revendications

1. Elément de soudage pour le soudage bout-à-bout de tubes en matière plastique, pourvu d'un fil chauffant enroulé pour le chauffage par résistance électrique qui peut être placé entre les extrémités jointives des tubes, lesquelles peuvent être pressées les unes contre les autres lorsque l'élément de soudage est chauffé à la température de soudage et qui, après coupure du chauffage, restent attachées les unes aux autres, jusqu'à ce que la zone soudée durcisse par refroidissement, l'élément de soudage étant un disque annulaire dont le diamètre extérieur est à peu près égal au diamètre extérieur des tubes et dont le diamètre intérieur est à peu près égal à la section nominale de passage des tubes et le fil chauffant enroulé s'étendant en spirale autour du centre géométrique du disque annulaire, caractérisé en ce que le fil chauffant enroulé est placé sur les deux surfaces latérales annulaires (2, 2a) venant s'appliquer sur les extrémités (20, 21) des tubes, en s'étendant vers l'intérieur, à partir d'une surface latérale annulaire (2), sur le pourtour extérieur, vers le centre géométrique, en passant à cet endroit sur l'autre surface latérale annulaire (2a) et en revenant ensuite de l'intérieur vers le pourtour extérieur, et en ce que les deux surfaces latérales annulaires (2, 2a) du disque annulaire (5) présentent des gorges (8), imposant le parcours du fil (9), dans lesquelles le fil (9) peut être placé coincé, servant d'organes de fixation pour le fil chauffant enroulé.

2. Elément de soudage selon la revendication 1, caractérisé en ce que le disque annulaire (5) est placé dans un élément en selle (12), ayant la forme d'une portion de douille.

3. Elément de soudage selon l'une des revendications 1 et 2, caractérisé en ce que les extrémités (10, 11) des fils chauffants enroulés sont reliées sur le disque annulaire (5) avec des éléments de contact (18, 19), placés sur l'élément en selle (12).

4. Elément de soudage selon l'une des revendications 1 à 3, caractérisé en ce que l'élément en selle (12) entoure le disque annulaire (5) sur plus de 180°.

5. Elément de soudage selon l'une des revendications 1 à 4, caractérisé en ce que le disque annulaire (5) et l'élément en selle (12) comportent des éléments de liaison pouvant être amenés en prise réciproque.

6. Elément de soudage selon la revendication 5, caractérisé en ce qu'il est prévu comme élément de liaison au moins une partie saillante (7), dépassant radialement du disque annulaire (5) et au moins un évidement (15), pratiqué dans l'élément en selle (12), logeant la partie saillante (7).

7. Elément de soudage selon la revendication 6, caractérisé en ce que la partie saillante (7) traverse l'évidement (15) et en ce que des bords de la partie saillante (7), dépassant de l'évidement (15), sont reliés à l'élément en selle (12).

8. Elément de soudage selon l'une des revendications 1 à 7, caractérisé en ce que la surface d'enveloppe intérieure (14) de l'élément en selle (12) présente une rainure (13) logeant le bord périphérique du disque annulaire (5), dont la largeur est supérieure à l'épaisseur du disque annulaire (5).

9. Elément de soudage selon l'une des revendications 1 à 8, caractérisé en ce que le matériau du disque annulaire (5) et de l'élément en selle (12) est du polyéthylène.
